# EUROPÄISCHE PATENTSCHRIFT

(11) **EP 2 738 420 B1**
(45) Veröffentlichungstag und Bekanntmachung des Hinweises auf die Patenterteilung: **23.10.2019**
(21) Anmeldenummer: 13194506.5
(22) Anmeldetag: 26.11.2013
(51) Int. Cl.: F16H 3/00

(54) **Doppelkupplungsgetriebe für ein Kraftfahrzeug**
Double clutch gearbox for a motor vehicle
Boîte de vitesses à double embrayage pour un véhicule automobile

(30) Priorität: 03.12.2012 DE 102012111726; 02.05.2013 DE 102013104468
(43) Veröffentlichungstag der Anmeldung: 04.06.2014
(73) Patentinhaber: Magna PT B.V. & Co. KG, 74199 Untergruppenbach (DE)
(72) Erfinder: Bernhardt, Udo, 50259 Pulheim (DE)
(74) Vertreter: Rausch, Gabriele

(56) Entgegenhaltungen:
- WO-A2-2009/050080
- DE-A1-102007 051 806
- DE-A1-102009 002 349
- DE-A1-102013 207 691

## Beschreibung

Die Erfindung betrifft ein Doppelkupplungsgetriebe für ein Kraftfahrzeug, wobei das Doppelkupplungsgetriebe eine erste und zweite Eingangswelle sowie eine erste und zweite Ausgangswelle umfasst.

Aus der DE 10 2008 024 633 A1 ist ein derartiges Doppelkupplungsgetriebe bekannt. Die Eingangswellen sind koaxial zueinander angeordnet. Mehrere Festräder und Losräder dienen dazu, ein von einem Motor in die Eingangswellen eingeleitetes Drehmoment auf eine der Ausgangswellen zu übertragen. Die erste Ausgangswelle ist dabei drehfest mit einem ersten Ritzel verbunden, während die zweite Ausgangswelle drehfest mit einem zweiten Ritzel verbunden ist, wobei die Ritzel mit einem Ringrad kämmen. Das Ringrad ist an einer Motorseite des Doppelkupplungsgetriebes angeordnet, also an der Seite des Getriebes, an der die koaxialen Eingangswellen über Kupplungen mit dem Motor des Kraftfahrzeugs gekoppelt werden können. Im Folgenden wird die Motorseite auch Anfangsseite genannt. Das Doppelkupplungsgetriebe weist dabei mehrere Vorwärtsgänge auf, wobei bei einem eingelegten Gang Drehmoment von einer Eingangswelle über ein dem Gang zugeordnetes Zahnradpaar, bestehend aus Losrad und Festrad, auf eine der Ausgangswellen übertragen wird, die das Drehmoment über das Ringrad an den Abtrieb abgibt, um das Kraftfahrzeug beispielsweise zu beschleunigen oder auf konstanter Geschwindigkeit zu halten.

Neben den Vorwärtsgängen weist das Doppelgetriebe der DE 10 2008 024 633 A1 einen Rückwärtsgang auf. Ist dieser Rückwärtsgang eingelegt, erfolgt der Drehmomentpfad über eine Losradkombination, die ein erstes Kuppel-Losrad, ein zum ersten Kuppel-Losrad koaxial angeordnetes, zweites Kuppel-Losrad und eine schaltbare Losrad-Kupplung umfasst, durch die das erste und das zweite Kuppel-Losrad drehfest miteinander verbunden werden können. Bei eingelegtem Rückwärtsgang sind die beiden Kuppel-Losräder drehfest verbunden, können sich jedoch frei zur Ausgangswelle drehen, auf der sie angeordnet sind. Der Drehmomentfluss erfolgt dabei vom Motor über eine der Eingangswellen auf die miteinander drehfest verbundenen Kupplungs-Losräder, von dort aus auf ein Zwischenrad, auf ein geschaltetes Rückwärtsgang-Losrad, das auf der anderen Ausgangswelle angeordnet ist, und schließlich zum Abtrieb. Somit sind sowohl die Losrad-Kupplung und als auch eine dem Losrad-Rückwärtsgang zugeordnete Gangschaltkupplung geschaltet oder aktiviert.

Das Doppelkupplungsgetriebe der DE 10 2008 024 633 A1 weist eine vergleichsweise kurze axiale Baulänge auf und lässt sich daher bei einem Kraftfahrzeug mit Frontabtrieb quer zur Fahrtrichtung gut unterbringen. Der Bauraum ist bei einem Kraftfahrzeug bei quer eingebautem Motor und Getriebe insbesondere in Axialrichtung stark beschränkt und führt deswegen zu hohen Packaging-Anforderungen. Andererseits steigen die Anforderungen an ein Kraftfahrzeug hinsichtlich Fahrkomfort und Effizienz ständig, was zu Getrieben mit einer größeren Anzahl von Gängen und damit im Allgemeinen zu mehr Platzbedarf für das Getriebe führt. Bei der Gestaltung des Getriebes ist weiterhin zu beachten, dass die Übersetzungsverhältnisse der einzelnen Gänge zwecks Fahrkomfort aufeinander abgestimmt sein müssen, was Einfluss auf Zahnraddurchmesser und Achsabstände hat. Auch sollte der Aufbau des Getriebes möglichst einfach sein, um die Herstellkosten niedrig zu halten. Somit ist die Auslegung eines Getriebes oder insbesondere seines Radsatzes eine komplexe Aufgabe, die von sehr unterschiedlichen und zum Teil gegensätzlichen Anforderungen gekennzeichnet ist.

Die WO 2009/050080 A2 offenbart in ihrer Figur 1 ein Doppelkupplungsgetriebe, welches unter den Wortlaut des Oberbegriffs des Anspruchs 1 fällt.

Der Erfindung liegt daher die Aufgabe zu Grunde, ein Doppelkupplungsgetriebe für ein Kraftfahrzeug, insbesondere für ein Kraftfahrzeug mit Front-Querantrieb, bereit zu stellen, das die oben beschriebenen unterschiedlichen Anforderungen möglichst gut erfüllt.

Die der Erfindung zugrunde liegende Aufgabe wird mit der Merkmalskombination gemäß Anspruch 1 gelöst. Bevorzugte Ausführungsbeispiele können den Unteransprüchen entnommen werden.

Die Erfindung betrifft ein Doppelkupplungsgetriebe für ein Kraftfahrzeug. Eine erste Eingangswelle und eine zweite Eingangswelle sind zueinander koaxial angeordnet. Eine erste Kupplung ist zum Einleiten eines Drehmoments auf die erste Eingangswelle vorgesehen und eine zweiten Kupplung ist zum Einleiten eines Drehmoments auf die zweite Eingangswelle vorgesehen, wobei die Kupplungen an einer Anfangsseite des Doppelkupplungsgetriebes angeordnet sind. Eine erste Ausgangswelle und eine zweite Ausgangswelle sind vorgesehen. Mehrere endseitige Vorwärtsgänge der ersten Eingangswelle sind an einer von der Anfangsseite abgewandten Endseite des Doppelkupplungsgetriebes vorgesehen und mehrere anfangsseitige Vorwärtsgänge der zweiten Eingangswelle sind an der Anfangsseite des Doppelkupplungsgetriebes vorgesehen, wobei bei einem eingelegten Vorwärtsgang Drehmoment von einer Eingangswelle ohne Zwischenschaltung der anderen Eingangswelle auf eine der Ausgangswellen übertragbar ist, die das Drehmoment an einen Abtrieb abgibt. Wenigstens ein Zusatz-Vorwärtsgang mit zwei Kuppel-Losrädern ist vorgesehen, bei dem Drehmoment von der zweiten Eingangswelle auf die erste Eingangswelle übertragbar ist. Die zwei Kuppel-Losräder sind zueinander axial benachbart auf der ersten Ausgangswelle angeordnet und über eine schaltbare Losrad-Kupplung drehfest miteinander verbindbar. Ein Kuppel-Losrad kämmt als viertes Losrad eines zweiten anfangsseitigen Vorwärtsgangs mit einem vierten Festrad der zweiten Eingangswelle. Und ein weiteres Kuppel-Losrad kämmt als zweites Losrad eines zweiten endseitigen Vorwärtsgangs mit einem zweiten Festrad der ersten Eingangswelle.

Ist der Zusatz-Vorwärtsgang eingelegt, so sind zur Drehmomentübertragung von Motor auf den Abtrieb beide Eingangswellen notwendig. Im Gegensatz dazu erfolgt bei einem eingelegten Haupt-Vorwärtsgang die Drehmomentübertragung von dem Motor auf den Abtrieb nur über eine Eingangswelle ohne Zwischenschaltung der anderen Eingangswelle. Im Folgenden wird der Haupt-Vorwärtsgang auch Vorwärtsgang genannt.

In einem Ausführungsbeispiel ist die erste Eingangswelle als Innenwelle und die zweite Eingangswelle als Hohlwelle ausgebildet. Die beiden Eingangswellen lassen sich dabei an jeweils einem gleichen Ende über eine erste Kupplung und über eine zweite Kupplung mit dem Motor verbinden. Ein Festrad eines ersten Haupt-Vorwärtsgangs kann an einem der Anfangsseite abgewandten Ende der ersten Eingangswelle angeordnet sein. Diese der Anfangsseite des Getriebes abgewandte Seite des Getriebes wird im Folgenden auch Endseite des Getriebes genannt. Dieser erste Haupt-Vorwärtsgang wird im Folgenden auch erster endseitiger Vorwärtsgang genannt. Der erste endseitige Vorwärtsgang ist in nahester Entfernung zur Endseite des Getriebes angeordnet. Das Festrad des ersten Haupt-Vorwärtsgangs wird im Folgenden auch erstes Festrad des ersten endseitigen Vorwärtsgangs genannt. Dies eröffnet die Möglichkeit, das erste Festrad des ersten endseitigen Vorwärtsgangs in unmittelbarer Nähe eines ersten Hauptlagers für die Eingangswellen anzuordnen, so dass die über das erste Festrad des ersten endseitigen Vorwärtsgangs übertragenen hohen Kräfte ohne große Hebel vom ersten Hauptlager aufgenommen werden können.

In einem Ausführungsbeispiel entsprechen das erste Kuppel-Losrad einem Losrad des 4. Haupt-Vorwärtsgangs und das zweite Kuppel-Losrad einem Losrad des 5. Haupt-Vorwärtsgangs. Im Folgenden wird der 4. Haupt-Vorwärtsgang auch zweiter anfangsseitiger Vorwärtsgang genannt. Der zweite anfangsseitige Vorwärtsgang ist in zweit-nahester Entfernung zur Anfangsseite des Getriebes angeordnet. Im Folgenden wird das Losrad des 4. Haupt-Vorwärtsgangs auch viertes Losrad des zweiten anfangsseitigen Vorwärtsgangs genannt. Und der 5. Haupt-Vorwärtsgang wird im Folgenden auch zweiter endseitiger Vorwärtsgang genannt. Der zweite endseitige Vorwärtsgang ist in zweit-nahester Entfernung zur Endseite des Getriebes angeordnet. Das Losrad des 5. Haupt-Vorwärtsgangs wird im Folgenden auch zweites Losrad des zweiten endseitigen Vorwärtsgangs genannt. Dabei sind das vierte Losrad des zweiten anfangsseitigen Vorwärtsgangs und das zweite Losrad des zweiten endseitigen Vorwärtsgangs auf der ersten Ausgangswelle angeordnet und lassen sich jeweils drehfest mit der ersten Ausgangswelle verbinden. Besteht eine derartige drehfeste Verbindung zwischen erster Ausgangswelle und beispielsweise dem vierten Losrad des zweiten anfangsseitigen Vorwärtsgangs, kann die Losrad-Kupplung, welche für eine drehfeste Verbindung der beiden Losräder sorgt, nicht geschaltet werden.

Der Zusatz-Vorwärtsgang kann als Geländegang oder Crawler-Gang ausgebildet sein. Im Folgenden wird das Festrad des 4. Haupt-Vorwärtsgangs auch viertes Festrad des zweiten anfangsseitigen Vorwärtsgangs genannt. Und das Festrad des 5. Haupt-Vorwärtsgangs wird im Folgenden auch zweites Festrad des zweiten endseitigen Vorwärtsgangs genannt. In einem bevorzugten Ausführungsbeispiel verläuft das Drehmoment durch das Doppelkupplungsgetriebe wie folgt: Die zweite Eingangswelle wird von dem Motor angetrieben. Das vierte Festrad des zweiten anfangsseitigen Vorwärtsgangs ist drehfest mit der zweiten Eingangswelle verbunden. Das vierte Festrad des zweiten anfangsseitigen Vorwärtsgangs kämmt mit einem vierten Losrad des zweiten anfangsseitigen Vorwärtsgangs. Das vierte Losrad des zweiten anfangsseitigen Vorwärtsgangs ist auf der ersten Ausgangswelle axial neben einem zweiten Losrad des zweiten endseitigen Vorwärtsgangs angeordnet. Bei geschalteter oder aktivierter Losrad-Kupplung sind die nebeneinander angeordneten Losräder des zweiten anfangsseitigen Vorwärtsgangs und des zweiten endseitigen Vorwärtsgangs miteinander verbunden. Von dem zweiten Losrad des zweiten endseitigen Vorwärtsgangs erfolgt die Drehmomentabgabe auf das vierte Festrad des zweiten anfangsseitigen Vorwärtsgangs, welches auf der ersten Eingangswelle drehfest angeordnet ist. Bei eingelegtem Zusatzgang ist nicht nur die Losrad-Kupplung geschaltet, sondern auch ein Losrad des 1. Haupt-Vorwärtsgangs. Das Losrad des 1. Haupt-Vorwärtsgangs wird im Folgenden auch erstes Losrad des ersten endseitigen Vorwärtsgangs genannt. Somit erfolgt der Drehmomentfluss über die zweite Eingangswelle und das Zahnradpaar des ersten endseitigen Vorwärtsgangs, bestehend aus erstem Losrad und erstem Festrad, auf die Ausgangswelle, auf der das erste Losrad des ersten endseitigen Vorwärtsgangs angeordnet ist.

Das Übersetzungsverhältnis des Geländegangs bzw. des Crawler-Gangs entspricht dabei dem Übersetzungsverhältnis des ersten endseitigen Vorwärtsgangs multipliziert mit dem Verhältnis der Übersetzungsverhältnisse des zweiten endseitigen Vorwärtsgangs und des zweiten anfangsseitigen Vorwärtsgangs. Wenn also der Drehmomentfluss zunächst über das vierte Festrad des zweiten anfangsseitigen Vorwärtsgangs und dann über die Losradkombination das zweite Festrad des zweiten endseitigen Vorwärtsgangs erreicht, lässt sich unter Zuhilfenahme des ersten endseitigen Vorwärtsgangs ein Zusatzgang mit einer zum ersten endseitigen Vorwärtsgang kürzeren Übersetzung realisieren.

Unter einem Übersetzungsverhältnis wird das Drehzahlverhältnis der getriebenen Welle zu treibenden Welle verstanden. Wenn nun zwei Übersetzungsverhältnisse miteinander verglichen werden und eines der Übersetzungsverhältnisse kürzer und das andere länger ist, heißt das, dass beim kürzeren Übersetzungsverhältnis die getriebene Welle schneller dreht als beim längeren Übersetzungsverhältnis.

Wird hingegen die erste Eingangswelle vom Motor angetrieben, so lässt sich bei geschalteter Losrad-Kupplung ein Zusatzgang realisieren, der gegenüber einem weiteren Vorwärtsgang, dessen Losrad bei eingelegtem Zusatzgang geschaltet sein müsste, ein längeres Übersetzungsverhältnis aufweist.

Ein Festrad eines 2. Haupt-Vorwärtsgangs kann an der Anfangsseite des Getriebes in der Nähe eines zweiten Hauptlagers angeordnet sein. Im Folgenden wird der 2. Haupt-Vorwärtsgang auch erster anfangsseitiger Vorwärtsgang genannt. Der erste anfangsseitige Vorwärtsgang ist in nahester Entfernung zur Anfangsseite des Getriebes angeordnet. Das Festrad des 2. Haupt-Vorwärtsgangs wird im Folgenden auch fünftes Festrad des ersten anfangsseitigen Vorwärtsgangs genannt. Auch hier wiederum können die vergleichsweise hohen Kräfte am fünften Festrad des ersten anfangsseitigen Vorwärtsgangs ohne große Hebellängen vom zweiten Hauptlager aufgenommen werden. Im Radsatz stellen somit das erste Festrad des ersten endseitigen Vorwärtsgangs und das fünfte Festrad des ersten anfangsseitigen Vorwärtsgangs die äußersten Festräder dar, die auf den Eingangswellen angeordnet sind.

Auf der zweiten Ausgangswelle kann ein Losrad eines 3. Haupt-Vorwärtsgangs angeordnet sein, das mit einem Festrad des 3. Haupt-Vorwärtsgangs kämmt. Im Folgenden wird der 3. Haupt-Vorwärtsgang auch dritter endseitiger Vorwärtsgang genannt. Der dritte endseitige Vorwärtsgang ist in dritt-nahester Entfernung zur Endseite des Getriebes angeordnet. Das Losrad des 3. Haupt-Vorwärtsgangs wird im Folgenden auch drittes Losrad des dritten endseitigen Vorwärtsgangs genannt. Und das Festrad des 3. Haupt-Vorwärtsgangs wird im Folgenden auch drittes Festrad des dritten endseitigen Vorwärtsgangs genannt. In einem bevorzugten Ausführungsbeispiel ist das dritte Festrad des dritten endseitigen Vorwärtsgangs in axialer Richtung zwischen dem zweiten Festrad des zweiten endseitigen Vorwärtsgangs und dem vierten Festrad des zweiten anfangsseitigen Vorwärtsgangs angeordnet. Es ist aber auch möglich, das dritte Festrad des dritten endseitigen Vorwärtsgangs derart anzuordnen, dass, von der Anfangsseite des Getriebes aus gesehen, sich das vierte Festrad des zweiten anfangsseitigen Vorwärtsgangs, das zweite Festrad des zweiten endseitigen Vorwärtsgangs und dann das dritte Festrad des dritten endseitigen Vorwärtsgangs aneinander anreihen.

Auf der ersten Ausgangswelle kann eine erste Doppelgangschaltkupplung oder erste Gangschaltkupplung angeordnet sein, die in einer ersten Schaltposition das vierte Losrad des zweiten anfangsseitigen Vorwärtsgangs und in einer zweiten Schaltposition ein fünftes Losrad des ersten anfangsseitigen Vorwärtsgangs drehfest mit der ersten Ausgangswelle verbindet. Zwischen erster Schaltposition und zweiter Schaltposition kann die erste Gangschaltkupplung oder, soweit die Gangschaltkupplung eine Schiebemuffe umfasst, diese Schiebemuffe eine Neutralstellung einnehmen, in der weder das vierte Losrad des zweiten anfangsseitigen Vorwärtsgangs noch das fünfte Losrad des ersten anfangsseitigen Vorwärtsgangs drehfest mit der ersten Ausgangswelle verbunden ist.

Weiter kann eine zweite Doppelgangschaltkupplung oder zweite Gangschaltkupplung vorgesehen sein, die auf der ersten Ausgangswelle angeordnet ist und in einer ersten Schaltposition ein Losrad eines Haupt-Rückwärtsgangs und in einer zweiten Schaltposition das zweite Losrad des zweiten endseitigen Vorwärtsgangs drehfest mit der ersten Ausgangswelle verbindet. Im Folgenden wird der Haupt-Rückwärtsgang auch Rückwärtsgang genannt. Somit wäre ein Doppelkupplungsgetriebe offenbart, auf dessen erster Ausgangswelle von der Anfangsseite des Getriebes aus betrachtet die folgenden Zahnräder der Reihe nach angeordnet sind: fünftes Losrad des ersten anfangsseitigen Vorwärtsgangs, viertes Losrad des zweiten anfangsseitigen Vorwärtsgangs, zweites Losrad des zweiten endseitigen Vorwärtsgangs und Losrad des Rückwärtsgangs. Das vierte Losrad des zweiten anfangsseitigen Vorwärtsgangs und das zweite Losrad des zweiten endseitigen Vorwärtsgangs können dabei die Kuppel-Losräder sein, so dass neben der ersten und zweiten Gangschaltkupplung auch die Losrad-Kupplung auf der ersten Ausgangswelle angeordnet ist.

In einem weiteren Ausführungsbeispiel ist eine dritte Doppelgangschaltkupplung oder dritte Gangschaltkupplung vorgesehen, die auf der zweiten Ausgangswelle angeordnet ist und in einer ersten Schaltposition ein erstes Losrad des ersten endseitigen Vorwärtsgangs und in einer zweiten Schaltposition ein drittes Losrad eines dritten endseitigen Vorwärtsgangs drehfest mit der zweiten Ausgangswelle verbindet. Durch die drei Gangschaltkupplungen lässt sich somit ein Doppelkupplungsgetriebe mit fünf Vorwärtsgängen und einem Rückwärtsgang realisieren. Durch die Losradkombination mit der Losrad-Kupplung lässt sich zumindest ein zusätzlicher Zusatzgang bereitstellen, wobei dieser Zusatzgang ein Vorwärtsgang oder auch ein Rückwärtsgang sein kann. Die zweite und dritte Gangschaltkupplung können jeweils auch eine axial verschiebbare Schiebemuffe aufweisen.

Bei eingelegtem Rückwärtsgang kann der Drehmomentfluss über das erste Festrad des ersten endseitigen Vorwärtsgangs, über das erste Losrad des ersten endseitigen Vorwärtsgangs auf das Losrad des Rückwärtsgangs erfolgen. Das erste Losrad des ersten endseitigen Vorwärtsgangs kann dabei als gestuftes Zahnrad ausgebildet sein, wobei ein Teilzahnrad dieses gestuften Zahnrads mit dem ersten Festrad des ersten endseitigen Vorwärtsgangs in Eingriff steht, während das zweite Teilzahnrad mit dem Losrad des Rückwärtsgangs kämmt.

Auch kann ein 6. Haupt-Vorwärtsgang vorgesehen sein, dessen Festrad auf der zweiten Eingangswelle angeordnet sein kann. Im Folgenden wird der 6. Haupt-Vorwärtsgang auch dritter anfangsseitiger Vorwärtsgang genannt. Der dritte anfangsseitige Vorwärtsgang ist in dritt-nahester Entfernung zur Anfangsseite des Getriebes angeordnet. Das Festrad des 6. Haupt-Vorwärtsgangs wird im Folgenden auch viertes Festrad des dritten anfangsseitigen Vorwärtsgangs genannt. Dieser dritte anfangsseitige Vorwärtsgang kann als Grundlage für einen (weiteren) Zusatzgang dienen. In diesem Fall treibt der Motor die erste Eingangswelle an, auf der das dritte Festrad des dritten endseitigen Vorwärtsgangs sitzt. Die Losradkombination sorgt dann dafür, dass die zweite Eingangswelle schneller dreht als die erste Eingangswelle, so dass dies bei eingelegtem dritten anfangsseitigen Vorwärtsgang dann zu einem länger übersetzten Zusatzgang führt. Es besteht auch die Möglichkeit, dass das vierte Festrad des dritten anfangsseitigen Vorwärtsgangs dem dritten Festrad des dritten endseitigen Vorwärtsgangs entspricht. Dieses vierte Festrad, welches bevorzugt auf der ersten, als Innenwelle ausgebildeten Eingangswelle angeordnet ist, würde dann gleichzeitig mit dem zweiten Losrad des dritten endseitigen Vorwärtsgangs und mit dem Losrad des dritten anfangsseitigen Vorwärtsgangs kämmen. Um axiale Baulänge einzusparen, liegen das vierte Festrad und die Losräder des dritten endseitigen Vorwärtsgangs und des dritten anfangsseitigen Vorwärtsgangs in einer axialen Ebene, die sich senkrecht zu den Eingangswellen erstreckt.

Stellen die Kuppel-Losräder zusätzliche Bauteile dar, sind also nicht auch gleichzeitig die Losräder des zweiten anfangsseitigen Vorwärtsgangs und des zweiten endseitigen Vorwärtsgangs, können sie in einem Ausführungsbeispiel lediglich dazu dienen, einen Zusatzgang zu realisieren. Eine andere Möglichkeit besteht darin, dass zumindest eines der beiden Kuppel-Losräder als Losrad eines weiteren Vorwärtsgangs ausgebildet ist, welches sich drehfest mit der zweiten Ausgangswelle verbinden lässt. Diese weitere Vorwärtsgang könnte beispielsweise besagter dritter anfangsseitiger Vorwärtsgang sein.

Die Durchmesser der Ritzel auf der ersten und zweiten Ausgangswelle können gleichgroß sein oder auch unterschiedlich groß. In einem Ausführungsbeispiel ist der Durchmesser des zweiten Ritzels größer als der Durchmesser des ersten Ritzels. Auch kann ein Achsabstand zwischen erster Eingangswelle und erster Ausgangswelle größer sein als ein Achsabstand zwischen erster Eingangswelle und zweiter Ausgangswelle.

Es sei darauf hingewiesen, dass das Doppelkupplungsgetriebe nicht nur eine Losradkombination, sondern zusätzlich eine zweite Losradkombination ausweisen kann. So können die Kuppel-Losräder der einen Losradkombination die auf der ersten Ausgangswelle angeordneten Losräder des zweiten anfangsseitigen Vorwärtsgangs und des zweiten endseitigen Vorwärtsgangs sein, während die Losräder der zweiten Losradkombination auf der zweiten Ausgangswelle angeordnet sind. Die Kuppel-Losräder auf der zweiten Ausgangswelle können nur zur Realisierung eines weiteren Zusatzgangs verwendet werden oder auch zumindest ein Losrad eines weiteren Vorwärtsgangs sein. Sind zwei Losradkombinationen vorgesehen, ist es vorteilhaft, die Durchmesser von erstem Ritzel und zweitem Ritzel unterschiedlich groß und/oder die Achsabstände zwischen Eingangswelle und den Ausgangswellen unterschiedlich groß zu wählen, um mehrere Zusatzgänge mit unterschiedlich großen Übersetzungsverhältnissen zu erhalten.

Anhand der in den Zeichnungen dargestellten Ausführungsbeispielen wird die Erfindung näher erläutert. Es zeigen:
- Fig. 1: ein erstes Ausführungsbeispiel, welches nicht unter den Wortlaut des Anspruchs 1 fällt.
- Fig. 2: ein zweites Ausführungsbeispiel, welches nicht unter den Wortlaut des Anspruchs 1 fällt.
- Fig. 3: ein drittes Ausführungsbeispiel, welches nicht unter den Wortlaut des Anspruchs 1 fällt; und
- Fig. 4: ein Ausführungsbeispiel der Erfindung.

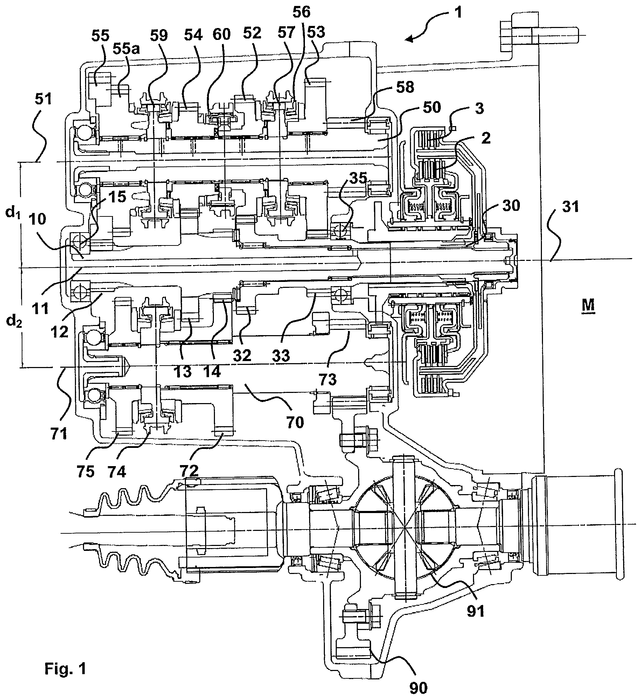

Figur 1 zeigt ein erstes Ausführungsbeispiel für ein Doppelkupplungsgetriebe, welches nicht unter den Wortlaut des Anspruchs 1 fällt. Das Doppelkupplungsgetriebe ist in seiner Gesamtheit mit 1 bezeichnet. Das Doppelkupplungsgetriebe umfasst eine erste Eingangswelle 10, eine zweite Eingangswelle 30, sowie eine erste Ausgangswelle 50 und eine zweite Ausgangswelle 70. Die entsprechenden Achsen, um die sich die Wellen 10, 30, 50 und 70 drehen, sind mit 11, 31, 51 und 71 bezeichnet. Die Eingangswelle 10 ist als Innenwelle ausgebildet, während die zweite Eingangswelle 30 eine Hohlwelle ist. Die beiden Eingangswellen 10, 30 sind koaxial zueinander angeordnet.

Auf der ersten Eingangswelle 10 sind drei Festräder 12, 13 und 14 angeordnet. Der Übersichtlichkeit halber erfolgt die Zählweise der Zahnräder in den Figuren von links nach rechts, also von der Endseite des Doppelkupplungsgetriebes 1 hin zu dessen Anfangsseite. Ein erstes Festrad 12 der ersten Eingangswelle 10, welches am Ende der ersten Eingangswelle 10 neben einem ersten Hauptlager 15 an der Endseite des Doppelkupplungsgetriebes 1 angeordnet ist, kämmt dabei mit einem ersten Losrad 55, welches auf der ersten Ausgangswelle 50 angeordnet ist. Erstes Festrad 12 und erstes Losrad 55 bilden ein erstes Zahnradpaar 12, 55, das einem ersten endseitigen Vorwärtsgang zugeordnet ist. Die Kennzeichnung erster endseitige deutet an, dass dieser Vorwärtsgang in nahester Entfernung zur Endseite des Doppelkupplungsgetriebes 1 angeordnet ist.

Ganz analog ermöglicht ein Zahnradpaar 13, 54, bestehend aus einem zweiten Festrad 13 der ersten Eingangswelle 10 und einem zweiten Losrad 54 auf der ersten Ausgangswelle 50, die Realisierung eines zweiten endseitigen Vorwärtsgangs. Die Kennzeichnung zweiter endseitige deutet an, dass dieser Vorwärtsgang in zweit-nahester Entfernung zur Endseite des Doppelkupplungsgetriebes 1 angeordnet ist.

Ein drittes Festrad 14 der ersten Eingangswelle 10 kämmt mit einem dritten Losrad 72, welches auf der zweiten Ausgangswelle 70 angeordnet ist. Drittes Festrad 14 und drittes Losrad 72 bilden ein drittes Zahnradpaar 14, 72, das einem dritten endseitigen Vorwärtsgang zugeordnet ist. Die Kennzeichnung dritter endseitige deutet an, dass dieser Vorwärtsgang in dritt-nahester Entfernung zur Endseite des Doppelkupplungsgetriebes 1 angeordnet ist.

Auf der zweiten Eingangswelle 30 sind zwei Festräder 32, 33 angeordnet. Ein fünftes Festrad 33 der zweiten Eingangswelle 30, welches am Anfang der zweiten Eingangswelle 30 neben einem zweiten Hauptlager 35 an der Anfangsseite des Doppelkupplungsgetriebes 1 angeordnet ist, kämmt dabei mit einem fünften Losrad 53, welches auf der ersten Ausgangswelle 50 angeordnet ist. Fünftes Festrad 33 und fünftes Losrad 53 bilden ein fünftes Zahnradpaar 33, 53, das einem ersten anfangsseitigen Vorwärtsgang zugeordnet ist. Die Kennzeichnung erster anfangsseitige deutet an, dass dieser Vorwärtsgang in nahester Entfernung zur Anfangsseite des Doppelkupplungsgetriebes 1 angeordnet ist.

Ein viertes Festrad 32, welches am Ende der zweiten Eingangswelle 30 angeordnet ist, kämmt dabei mit einem vierten Losrad 52 auf der ersten Ausgangswelle 50. Viertes Festrad 32 und viertes Losrad 52 bilden ein viertes Zahnradpaar 32, 52, das einem zweiten anfangsseitigen Vorwärtsgang zugeordnet ist. Die Kennzeichnung zweiter anfangsseitige deutet an, dass dieser Vorwärtsgang in zweit-nahester Entfernung zur Anfangsseite des Doppelkupplungsgetriebes 1 angeordnet ist.

Bei Kenntnis des zuvor beschriebenen Doppelkupplungsgetriebes kann der Fachmann weitere Festräder auf den beiden Eingangswellen anordnen sowie weitere Losräder auf den beiden Ausgangswellen anordnen und mit den entsprechend resultierenden weiteren Zahnradpaaren mehr als fünf Vorwärtsgänge und mehr als einen Rückwärtsgang realisieren.

Über diverse Gangschaltkupplungen 56, 59, 74 lassen sich die Losräder drehfest mit der jeweils sie tragenden Ausgangswelle 50, 70 verbinden. So ist eine erste Gangschaltkupplung 56 auf der ersten Ausgangswelle 50 vorgesehen, die in einer ersten Schaltposition das vierte Losrad 52 drehfest mit der ersten Ausgangswelle 50 verbindet. Diese erste Schaltposition entspricht der von der Anfangsseite des Doppelkupplungsgetriebes 1 weg nach links verrückten Position einer mit 57 bezeichneten Schaltmuffe der ersten Gangschaltkupplung 56. Befindet sich die erste Gangschaltkupplung 56 in der ersten Schaltposition, so ist der zweite anfangsseitige Vorwärtsgang eingelegt. Ein Drehmoment, das von einem hier nicht weiter dargestelltem Motor M über eine zweite Kupplung 2 auf die zweite Eingangswelle 30 übertragen wird, wird über die vierte Zahnradpaarung 32, 52 auf die erste Ausgangswelle 50 übertragen. Ein erstes Ritzel 58 auf der ersten Ausgangswelle 50 kämmt mit einem Ringrad 90, das in Eingriff steht mit einem Abtrieb 91. Im kämmenden Eingriff mit dem Ringrad 90 steht weiterhin ein zweites Ritzel 72 auf der zweiten Ausgangswelle 70. Eine erste Kupplung 3 dient zur Verbindung des Motors M mit der ersten Eingangswelle 10.

Befindet sich die erste Gangschaltkupplung 56 in einer zweiten Schaltposition, d.h. die Schaltmuffe 57 wäre in der Darstellung der Figur 1 nach rechts verrückt, zur Anfangsseite des Doppelkupplungsgetriebes 1 hin, so besteht eine drehfeste Verbindung zwischen erster Ausgangswelle 50 und dem fünften Losrad 53, wodurch der erste anfangsseitige Vorwärtsgang eingelegt ist.

Die erste Ausgangswelle 50 trägt eine zweite Gangschaltkupplung 59, die wie die erste Gangschaltkupplung 56 eine erste und eine zweite Schaltposition einnehmen kann. Mit einer Schaltmuffe der zweiten Gangschaltkupplung 59 lässt sich in einer ersten Schaltposition zur Endseite des Doppelkupplungsgetriebes 1 hin nach links verrückten Position somit der erste endseitige Vorwärtsgang einlegen und in einer zweiten Schaltposition der Schaltmuffe der zweiten Gangschaltkupplung 59 lässt sich in einer von der Endseite des Doppelkupplungsgetriebes 1 weg nach rechts verrückten Position der zweite endseitige Vorwärtsgang einlegen.

Eine dritte Gangschaltkupplung 74 sitzt auf der zweiten Ausgangswelle 70. Auch sie weist zwei Schaltpositionen auf. In einer zur Endseite des Doppelkupplungsgetriebes 1 hin nach links verrückten ersten Schaltposition einer Schaltmuffe der dritten Gangschaltkupplung 74 kann ein Rückwärtsgang eingelegt werden, in einer von der Endseite des Doppelkupplungsgetriebes 1 weg nach rechts verrückten zweiten Schaltposition der Schaltmuffe der dritten Gangschaltkupplung 74 kann der dritte endseitige Vorwärtsgang eingelegt werden kann. Bei eingelegtem Rückwärtsgang erfolgt der Drehmomentfluss über das erste Festrad 12 und das als gestuftes Zahnrad ausgebildete erste Losrad 55, wobei ein kleineres Zahnrad 55a des gestuften Zahnrads mit einem sechsten Losrad 75 auf der zweiten Ausgangswelle 70 kämmt.

Eine Losrad-Kupplung 60 ist zwischen dem vierten Losrad 52 und dem zweiten Losrad 54 vorgesehen, um diese beiden Losräder 52, 54 drehfest miteinander zu verbinden. Besteht eine derartige feste Drehverbindung, so kann unter Zuhilfenahme des ersten endseitigen Vorwärtsgangs ein Zusatz-Vorwärtsgang geschaffen werden, der eine kürzere Übersetzung aufweist als der erste endseitige Vorwärtsgang. Dabei treibt der Motor M die zweite Eingangswelle 30 und somit das vierte Festrad 32 an. Über die Losräder 52, 54 gelangt das Drehmoment auf das dritte Festrad 14 zur ersten Eingangwelle 10. Da das Übersetzungsverhältnis des zweiten anfangsseitigen Vorwärtsgangs kürzer ist als das Übersetzungsverhältnis des zweiten endseitigen Vorwärtsgangs, dreht sich die erste Eingangswelle 10 langsamer als die zweite Eingangswelle 30. Bei eingelegtem ersten endseitigen Vorwärtsgang und geschalteter bzw. aktivierter Losrad-Kupplung 60 ergibt sich somit ein zusätzlicher Gang mit besonders kurzer Übersetzung. Wird bei geschlossener Losrad-Kupplung 60 der Rückwärtsgang eingelegt, so würde daraus ein Zusatz-Rückwärtsgang resultieren.

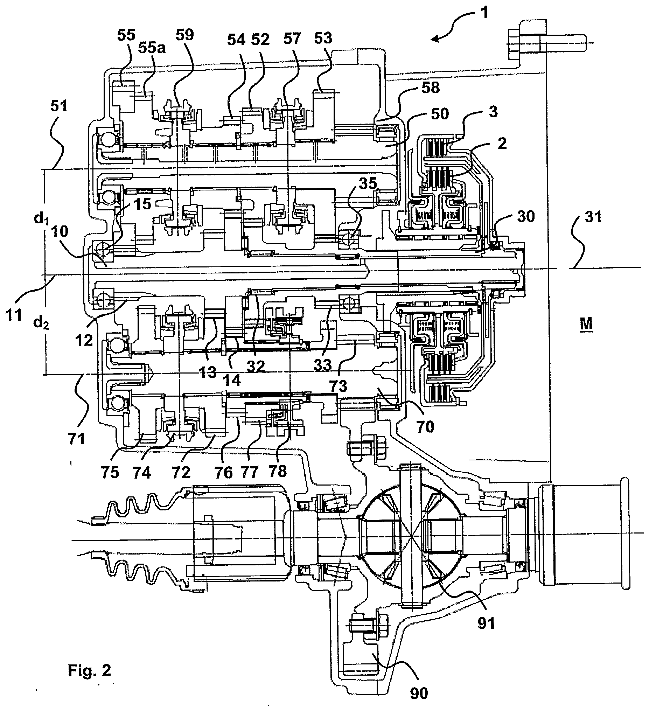

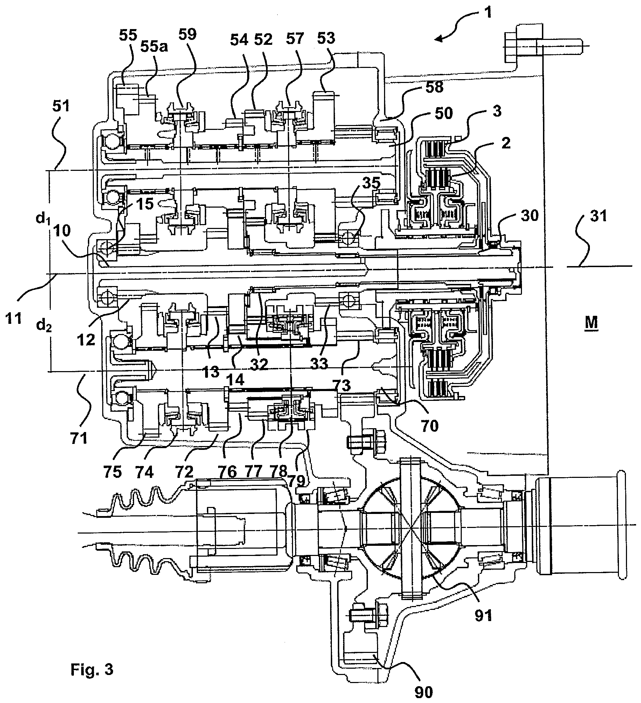

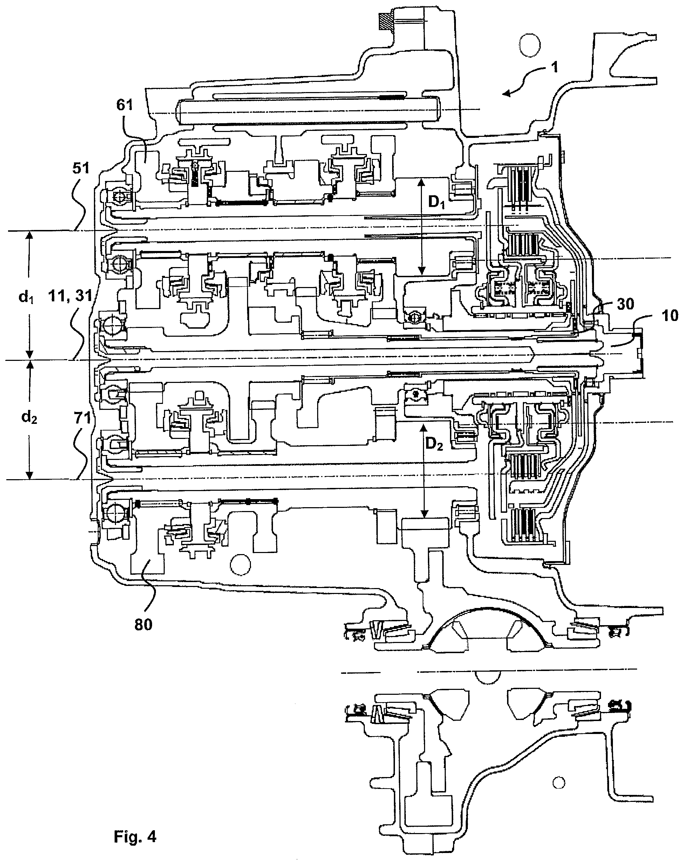

Figur 2 und 3 zeigen ein weiteres Doppelkupplungsgetriebe, welches nicht unter den Wortlaut des Anspruchs 1 fällt. Bauteile, die zu den Bauteilen der Figur 1 ähnlich oder identisch sind, werden dabei mit gleichen Bezugszeichen versehen. Dies gilt sinngemäß auch für Figur 4. Bei der Beschreibung zu den Figuren 2 bis 4 wird im Wesentlichen nur auf die Änderungen im Vergleich zum Ausführungsbeispiel der Figur 1 eingegangen. In Bezug auf ähnliche oder identische Bauteile und Gegebenheiten sei daher auf die Beschreibung zu Figur 1 verwiesen.

Im Gegensatz zum Ausführungsbeispiel der Figur 1 bilden nicht die Losräder 52, 54 des zweiten anfangsseitigen Vorwärtsgangs und des zweiten endseitigen Vorwärtsgangs eine Losradkombination 52, 54, 60 mit einer Losrad-Kupplung 60, sondern zusätzliche Losräder 76, 77, die, wie in Figur 2 und 3 dargestellt, auf der zweiten Ausgangswelle 70 angeordnet sein können bilden mit einer Losrad-Kupplung 78 eine Losradkombination 76, 77, 78. Mit der Losrad-Kupplung 78 lassen sich die Losräder 76, 77 drehfest miteinander verbinden.

Es sei darauf hingewiesen, dass in der Darstellung der Figuren 2 und 3 die Losrad-Kupplung 78 in zwei verschiedenen Ausführungen dargestellt sind. In einer ersten Ausführung nach Figur 2, ist die Losrad-Kupplung 78 als Einfachkupplung ausgebildet, die neben einer Neutralstellung nur eine Schaltposition aufweist. In dieser zur Anfangsseite des Doppelkupplungsgetriebes 1 hin nach rechts verrückten Schaltposition einer Schaltmuffe der die Losrad-Kupplung 78 kommt es zur drehfesten Verbindung der Losräder 76, 77.

In einer zweiten Ausführung nach Figur 3, ist die Losrad-Kupplung 78 als Doppelschaltkupplung ausgebildet, wobei zusätzlich zu der Schaltposition eine weitere Schaltposition 79 vorgesehen ist. In dieser von der Anfangsseite des Doppelkupplungsgetriebes 1 weg nach links verrückten weiteren Schaltposition 79 der Schaltmuffe der Losrad-Kupplung 78 wird ein siebtes Losrad 76 drehfest mit der zweiten Ausgangswelle 70 verbunden und stellt ein Losrad eines dritten anfangsseitigen Vorwärtsgangs dar. Die Kennzeichnung dritter anfangsseitiger deutet an, dass dieser Vorwärtsgang in dritt-nahester Entfernung zur Anfangsseite des Doppelkupplungsgetriebes 1 angeordnet ist. Das Doppelkupplungsgetriebe 1 würde dann ein Festrad, nämlich das dritte Festrad 14 aufweisen, das gleichzeitig mit zwei Losrädern von zwei Vorwärtsgängen, nämlich mit dem zweiten Losrad 54 der ersten Eingangswelle 10 und mit dem siebten Losrad 76 der zweiten Ausgangswelle 70 direkt kämmt. Die Übersetzung des dritten anfangsseitigen Vorwärtsgangs könnte etwas länger sein als die Übersetzung des zweiten endseitigen Vorwärtsgangs. Jedoch ist zu beachten, dass bei einem Schalten vom zweiten endseitigen Vorwärtsgang in den dritten anfangsseitigen Hauptvorwärtsgang eine Zugkraftunterbrechung in Kauf genommen werden müsste, die üblicherweise beim Schalten zwischen benachbarten Gänge in einem Doppelkupplungsgetriebe nicht gegeben ist.

In den Figuren sind diverse Achsabstände eingezeichnet. Ein Achsabstand d₁ zwischen den Achsen 11, 31 der Eingangswellen 10, 30 und der Achse 51 der ersten Ausgangswelle 50 wird mit d₁ gekennzeichnet. Dieser Achsabstand d₁ ist etwas größer als ein Achsabstand d₂, zwischen den Achsen 11, 31 der Eingangswellen 10, 30 und der Achse 71 der zweiten Ausgangswelle 70.

Figur 4 zeigt ein Ausführungsbeispiel eines erfindungsgemäßen Doppelkupplungsgetriebes 1.

Im Gegensatz zu den Ausführungsbeispielen der Figuren 1 bis 3 ist das Losrad des ersten endseitigen Vorwärtsgangs, welches in Figur 4 mit 80 bezeichnet wird, auf der zweiten Ausgangswelle 70 angeordnet. Losrad 80 wird auch als erstes Losrad 80 bezeichnet. Im Gegenzug befindet sich nun das mit 61 bezeichnete Losrad des Rückwärtsgangs auf der ersten Ausgangswelle 50. Losrad 61 wird auch als sechstes Losrad 61 bezeichnet. Auch hier ist der Achsabstand d₁ etwas größer als der Achsabstand d₂. In Figur 4 sind auch die Durchmesser D₁, D₂ der Ritzel 58, 73 dargestellt. Der Durchmesser D₁ des ersten Ritzels 58 kann dabei etwas kleiner als der Durchmesser D₂ des zweiten Ritzels 73 sein.

### Bezugszeichenliste

- 1: Doppelkupplungsgetriebe
- 2: zweite Kupplung
- 3: erste Kupplung
- 10: erste Eingangswelle
- 11: Achse der ersten Eingangswelle
- 12: erstes Festrad
- 13: zweites Festrad
- 14: drittes Festrad
- 15: erstes Hauptlager
- 30: zweite Eingangswelle
- 31: Achse der zweiten Eingangswelle
- 32: viertes Festrad
- 33: fünftes Festrad
- 35: zweites Hauptlager
- 50: erste Ausgangswelle
- 51: Achse der ersten Ausgangswelle
- 52: viertes Losrad
- 53: fünftes Losrad
- 54: zweites Losrad
- 55: erstes Losrad
- 56: erste Gangschaltkupplung
- 57: Schaltmuffe
- 58: erstes Ritzel
- 59: zweite Gangschaltkupplung
- 60: Losrad-Kupplung
- 61: sechstes Losrad
- 70: zweite Ausgangswelle
- 71: Achse der zweiten Ausgangswelle
- 72: drittes Losrad
- 73: zweites Ritzel
- 74: dritte Gangschaltkupplung
- 75: sechstes Losrad
- 76: siebtes Losrad
- 77: Losrad
- 78: Losrad-Kupplung
- 79: zweite Schaltposition der Losrad-Kupplung
- 80: erstes Losrad
- 90: Ringrad
- 91: Abtrieb
- d₁: Achsabstand zwischen den Achsen der Eingangswellen und der Achse der ersten Ausgangswelle
- d₂: Achsabstand zwischen den Achsen der Eingangswellen und der Achse der zweiter Ausgangswelle
- D₁: Durchmesser des ersten Ritzels
- D₂: Durchmesser des zweiten Ritzels

## Patentansprüche

1. Doppelkupplungsgetriebe (1) für ein Kraftfahrzeug,
- mit einer ersten Eingangswelle (10) und einer zweiten Eingangswelle (30), die koaxial zueinander angeordnet sind;
- mit einer ersten Kupplung (3) zum Einleiten eines Drehmoments auf die erste Eingangswelle (10) und einer zweiten Kupplung (2) zum Einleiten eines Drehmoments auf die zweite Eingangswelle (30), wobei die Kupplungen (2, 3) an einer Anfangsseite des Doppelkupplungsgetriebes (1) angeordnet sind;
- mit einer ersten Ausgangswelle (50) und einer zweiten Ausgangswelle (70); und
- mit mehreren endseitigen Haupt-Vorwärtsgängen der ersten Eingangswelle (10) an einer von der Anfangsseite abgewandten Endseite des Doppelkupplungsgetriebes (1) und mehreren anfangsseitigen Haupt-Vorwärtsgängen der zweiten Eingangswelle (30) an der Anfangsseite des Doppelkupplungsgetriebes (1), wobei bei einem eingelegten Haupt-Vorwärtsgang Drehmoment von einer Eingangswelle (10, 30) ohne Zwischenschaltung der anderen Eingangswelle (30, 10) auf eine der Ausgangswellen (50, 70) übertragbar ist, die das Drehmoment an einen Abtrieb (91) abgibt;
wobei wenigstens ein Zusatz-Vorwärtsgang mit zwei Kuppel-Losrädern (52, 54) vorgesehen ist, bei dem Drehmoment von der zweiten Eingangswelle (30) auf die erste Eingangswelle (10) übertragbar ist;
wobei die zwei Kuppel-Losräder (52, 54) zueinander axial benachbart auf der ersten Ausgangswelle (50) angeordnet sind und über eine schaltbare Losrad-Kupplung (60) drehfest miteinander verbindbar sind;
wobei ein Kuppel-Losrad (52) der zwei Kuppel-Losräder (52, 54) als Losrad (52) eines zweiten anfangsseitigen Haupt-Vorwärtsgangs mit einem Festrad (32) der zweiten Eingangswelle (30) kämmt; und
wobei das andere Kuppel-Losrad (54) der zwei Kuppel-Losräder (52, 54) als Losrad (54) eines zweiten endseitigen Haupt-Vorwärtsgangs mit einem Festrad (13) der ersten Eingangswelle (10) kämmt, derart, dass dann, wenn die Kuppel-Losräder (52, 54) drehfest miteinander verbunden sind, und wenn die zweite Kupplung (2) ein Drehmoment auf die zweite Eingangswelle (30) einleitet, der Zusatz-Vorwärtsgang eingelegt ist, indem ein erster endseitiger Haupt-Vorwärtsgang der ersten Eingangswelle (10) eingelegt ist,
wobei ein Losrad (80-Fig.4) des ersten endseitigen Haupt-Vorwärtsgangs auf der zweiten Ausgangswelle (70-Fig.4) angeordnet ist, wobei ein Losrad (61-Fig.4) eines Rückwärtsganges auf der ersten Ausgangswelle (50) angeordnet ist, wobei die zweite Kupplung (2) dann, wenn der Zusatz-Vorwärtsgang eingelegt ist, Drehmoment von der zweiten Eingangswelle (30) mit dem Produkt von Übersetzungsverhältnissen des zweiten anfangsseitigen Haupt-Vorwärtsgangs, des zweiten endseitigen Haupt-Vorwärtsgangs und des ersten endseitigen Haupt-Vorwärtsgangs auf die zweite Ausgangswelle (70-Fig.4) einleitet,
wobei der erste endseitige Haupt-Vorwärtsgang ein kürzestes Übersetzungsverhältnis der anfangsseitigen Haupt-Vorwärtsgänge und der endseitigen Haupt-Vorwärtsgänge aufweist,
**dadurch gekennzeichnet, dass**
ein Übersetzungsverhältnis des zweiten anfangsseitigen Haupt-Vorwärtsgangs kürzer ist als ein Übersetzungsverhältnis des zweiten endseitigen Haupt-Vorwärtsgangs, derart, dass die zweite Kupplung (2) zum Einlegen des Zusatz-Vorwärtsgangs Drehmoment von der zweiten Eingangswelle (30) mit einem Übersetzungsverhältnis auf die zweite Ausgangswelle (70-Fig.4) einleitet, das kürzer als das Übersetzungsverhältnis des ersten endseitigen Haupt-Vorwärtsgangs ist.

2. Doppelkupplungsgetriebe (1) nach Anspruch 1, **dadurch gekennzeichnet, dass** die erste Ausgangswelle (50) drehfest mit einem ersten Ritzel (58) und die zweite Ausgangswelle (70) drehfest mit einem zweiten Ritzel (73) verbunden sind; und dass ein Durchmesser (D₂) des zweiten Ritzels (73) größer ist als ein Durchmesser (D₁) des ersten Ritzels (58).

3. Doppelkupplungsgetriebe (1) nach einem der Ansprüche 1 bis 2, **dadurch gekennzeichnet, dass** ein Achsabstand (d₁) zwischen erster Eingangswelle (10) und erster Ausgangswelle (50) größer ist als ein Achsabstand (d₂) zwischen erster Eingangswelle (10) und zweiter Ausgangswelle (70).

## Claims

1. Double clutch gearbox (1) for a motor vehicle, comprising
- a first input shaft (10) and a second input shaft (30) which are arranged coaxially with one another;
- a first clutch (3) for applying a torque to the first input shaft (10) and a second clutch (2) for applying a torque to the second input shaft (30), the clutches (2, 3) being arranged on a start side of the double clutch gearbox (1);
- a first output shaft (50) and a second output shaft (70); and
- a plurality of end-side main forward gears of the first input shaft (10) on an end side of the double clutch gearbox (1) oriented away from the start side, and a plurality of start-side main forward gears of the second input shaft (30) on the start side of the double clutch gearbox (1), wherein, with a main forward gear engaged, a torque can be transmitted from an input shaft (10, 30), without the intermediate engagement of the other input shaft (30, 10), to one of the output shafts (50, 70) which delivers the torque to a power take-off (91),
wherein at least one additional forward gear having two coupling loose wheels (52, 54) is provided, in the case of which additional forward gear torque can be transmitted from the second input shaft (30) to the first input shaft (10);
wherein the two coupling loose wheels (52, 54) are arranged axially adjacent to one another on the first output shaft (50) and can be connected non-rotatably to one another via a shiftable loose wheel clutch (60);
wherein one coupling loose wheel (52) of the two coupling loose wheels (52, 54), as loose wheel (52) of a second start-side main forward gear, meshes with a fixed wheel (32) of the second input shaft (30); and
wherein the other coupling loose wheel (54) of the two coupling loose wheels (52, 54), as loose wheel (54) of a second end-side main forward gear, meshes with a fixed wheel (13) of the first input shaft (10) such that, when the coupling loose wheels (52, 54) are connected non-rotatably to one another, and when the second clutch (2) applies a torque to the second input shaft (30), the additional forward gear is engaged by virtue of a first end-side main forward gear of the first input shaft (10) being engaged,
wherein a loose wheel (80-Fig. 4) of the first end-side main forward gear is arranged on the second output shaft (70-Fig. 4), wherein a loose wheel (61-Fig. 4) of a reverse gear is arranged on the first output shaft (50), wherein when the additional forward gear is engaged the second clutch (2) transmits torque from the second input shaft (30) to the second output shaft (70-Fig. 4) with the product of gear ratios of the second start-side main forward gear, the second end-side main forward gear and the first end-side main forward gear, wherein the first end-side main forward gear has a shortest gear ratio of the start-side main forward gears and of the end-side main forward gears,
**characterized in that**
a gear ratio of the second start-side main forward gear is shorter than a gear ratio of the second end-side main forward gear, such that the second clutch (2), in order to engage the additional forward gear, applies a torque from the second input shaft (30) to the second output shaft (70-Fig. 4) with a gear ratio which is shorter than the gear ratio of the first end-side main forward gear.

2. Double clutch gearbox (1) according to Claim 1, **characterized in that** the first output shaft (50) is connected non-rotatably to a first pinion (58) and the second output shaft (70) is connected non-rotatably to a second pinion (73); and **in that** a diameter (D₂) of the second pinion (73) is larger than a diameter (D₁) of the first pinion (58).

3. Double clutch gearbox (1) according to either one of Claims 1 and 2, **characterized in that** a distance (d₁) between the axes of the first input shaft (10) and the first output shaft (50) is greater than a distance (d₂) between the axes of the first input shaft (10) and the second output shaft (70).

## Revendications

1. Boîte de vitesses à double embrayage (1) pour un véhicule automobile, comprenant
- un premier arbre d'entrée (10) et un deuxième arbre d'entrée (30) qui sont disposés coaxialement l'un par rapport à l'autre ;
- un premier embrayage (3) pour introduire un couple dans le premier arbre d'entrée (10) et un deuxième embrayage (2) pour introduire un couple dans le deuxième arbre d'entrée (30), les embrayages (2, 3) étant disposés sur un côté initial de la boîte de vitesses à double embrayage (1) ;
- un premier arbre de sortie (50) et un deuxième arbre de sortie (70) ; et
- plusieurs rapports de marche avant principaux du côté terminal du premier arbre d'entrée (10) au niveau d'un côté terminal de la boîte de vitesses à double embrayage (1) opposé au côté initial et plusieurs rapports de marche avant principaux du côté initial du deuxième arbre d'entrée (30) au niveau du côté initial de la boîte de vitesses à double embrayage (1), dans laquelle, dans le cas d'un rapport de marche avant principal enclenché, un couple d'un arbre d'entrée (10, 30) peut être transmis sans interposition de l'autre arbre d'entrée (30, 10) à l'un des arbres de sortie (50, 70) qui transfère le couple à une prise de force (91);
au moins un rapport de marche avant supplémentaire étant prévu avec deux roues libres d'accouplement (52, 54), le couple du deuxième arbre d'entrée (30) pouvant être transféré au premier arbre d'entrée (10) ;
les deux roues libres d'accouplement (52, 54) étant disposées axialement l'une à côté de l'autre sur le premier arbre de sortie (50) et pouvant être connectées l'une à l'autre de manière solidaire en rotation par le biais d'un embrayage de roues libres commutable (60) ;
une roue libre d'accouplement (52) des deux roues libres d'accouplement (52, 54), en tant que roue libre (52) d'un deuxième rapport de marche avant principal du côté initial, s'engrenant avec une roue fixe (32) du deuxième arbre d'entrée (30) ; et
l'autre roue libre d'accouplement (54) des deux roues libres d'accouplement (52, 54), en tant que roue libre (54) d'un deuxième rapport de marche avant principal du côté terminal, s'engrenant avec une roue fixe (13) du premier arbre d'entrée (10), de telle sorte qu'ensuite, lorsque les roues libres d'accouplement (52, 54) sont connectées de manière solidaire en rotation l'une à l'autre, et lorsque le deuxième embrayage (2) introduit un couple dans le deuxième arbre d'entrée (30), le rapport de marche avant supplémentaire soit enclenché par le fait qu'un premier rapport de marche avant principal du côté terminal du premier arbre d'entrée (10) est enclenché,
une roue libre (80-figure 4) du premier rapport de marche avant principal du côté terminal étant disposée sur le deuxième arbre de sortie (70-figure 4), une roue libre (61-figure 4) d'un rapport de marche arrière étant disposée sur le premier arbre de sortie (50), le deuxième embrayage (2), lorsque le rapport de marche avant supplémentaire est enclenché, introduisant un couple depuis le deuxième arbre d'entrée (30) avec le produit des rapports de démultiplication du deuxième rapport de marche avant principal du côté initial, du deuxième rapport de marche avant principal du côté terminal et du premier rapport de marche avant principal du côté terminal, dans le deuxième arbre de sortie (70-figure 4),
le premier rapport de marche avant principal du côté terminal présentant un rapport de démultiplication le plus court des rapports de démultiplications principaux du côté initial et des rapports de marche avant principaux du côté terminal,
**caractérisée en ce**
**qu'**un rapport de démultiplication du deuxième rapport de marche avant principal du côté initial est plus court qu'un rapport de démultiplication du deuxième rapport de marche avant principal du côté terminal de telle sorte que le deuxième embrayage (2), pour enclencher le rapport de marche avant supplémentaire, introduise un couple depuis le deuxième arbre d'entrée (30) avec un rapport de démultiplication dans le deuxième arbre de sortie (70-figure 4), qui est plus court que le rapport de démultiplication du premier rapport de marche avant principal du côté terminal.

2. Boîte de vitesses à double embrayage (1) selon la revendication 1, **caractérisée en ce que** le premier arbre de sortie (50) est connecté de manière solidaire en rotation à un premier pignon (58) et le deuxième arbre de sortie (70) est connecté de manière solidaire en rotation à un deuxième pignon (73) ; et
**en ce qu'**un diamètre (D₂) du deuxième pignon (73) est supérieur à un diamètre (D₁) du premier pignon (58).

3. Boîte de vitesses à double embrayage (1) selon l'une des revendications 1 et 2, **caractérisée en ce qu'**un écartement des axes (d₁) entre le premier arbre d'entrée (10) et le premier arbre de sortie (50) est supérieur à un écartement des axes (d₂) entre le premier arbre d'entrée (10) et le deuxième arbre de sortie (70).
